(19) Europäisches Patentamt / European Patent Office / Office européen des brevets

(11) EP 2 755 488 B1

(12) **EUROPEAN PATENT SPECIFICATION**

(45) Date of publication and mention of the grant of the patent:
**21.11.2018 Bulletin 2018/47**

(21) Application number: **12831295.6**

(22) Date of filing: **13.09.2012**

(51) Int Cl.:
***A01N 43/90*** *(2006.01)* ***A01N 37/22*** *(2006.01)*
***A01P 13/00*** *(2006.01)*

(86) International application number:
**PCT/US2012/055085**

(87) International publication number:
**WO 2013/040163 (21.03.2013 Gazette 2013/12)**

(54) **SYNERGISTIC HERBICIDAL COMPOSITION CONTAINING PENOXSULAM AND PRETILACHLOR**

SYNERGISTISCHE HERBIZIDZUSAMMENSETZUNG MIT PENOXSULAM UND PRETILACHLOR

COMPOSITION HERBICIDE SYNERGIQUE CONTENANT DU PENOXSULAM ET DU PRETILACHLOR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2011 US 201161534419 P**

(43) Date of publication of application:
**23.07.2014 Bulletin 2014/30**

(73) Proprietor: **Dow AgroSciences LLC**
**Indianapolis, IN 46268 (US)**

(72) Inventors:
- **HUANG, Yi-hsiou**
**Pingtung Hsieng 90841 (TW)**
- **MANN, Richard K.**
**Franklin, IN 46131 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
**CN-A- 101 647 450** **JP-A- 2012 171 928**
**US-A1- 2011 190 134** **US-A1- 2011 190 135**

- **DATABASE WPI Week 201020 Thomson Scientific, London, GB; AN 2010-C41622 XP002739115, -& CN 101 647 450 A (BEIJING YOLOO PESTICIDE CO LTD) 17 February 2010 (2010-02-17)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 755 488 B1

## Description

### Field

Provided herein are synergistic herbicidal compositions containing (a) penoxsulam and (b) pretilachlor for controlling growth of undesirable vegetation, particularly in multiple crops, including rice, cereal and grain crops, turf, industrial vegetation management (IVM), sugar cane and tree and vine orchards.

### Background

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.
CN 101 647 450 A describes herbicidal compositions comprising penoxsulam in combination with another compound, e.g. pretilachlor, in which case the weight ratio of pretilachlor to penoxsulam is from 5:1 to 30:1.

In some cases, herbicidal active ingredients have been shown to be more effective in combination than when applied individually and this is referred to as "synergism." As described in the Herbicide Handbook of the Weed Science Society of America, Ninth Edition, 2007, p. 429, "'synergism' [is] an interaction of two or more factors such that the effect when combined is greater than the predicted effect based on the response to each factor applied separately." This disclosure is based in part on the discovery that pretilachlor and penoxsulam, already known individually for their herbicidal efficacy, display a synergistic effect when applied in combination in a weight ratio of pretilachlor to penoxsulam being from 36:1 to 72:1.

### Summary

Provided herein are synergistic herbicidal mixtures comprising a herbicidally effective amount of (a) penoxsulam and (b) pretilachlor wherein the weight ratio of pretilachlor to penoxsulam is from 36:1 to 72:1. The compositions may also contain an agriculturally acceptable adjuvant or carrier.

Provided herein are also methods of controlling the growth of undesirable vegetation in multiple crops, including rice, cereal and grain crops, turf, IVM, sugar cane and tree and vine orchards, and the use of this synergistic composition.

### Detailed Description

Penoxsulam is the common name for 2-(2,2-difluoroethoxy)-*N*-(5,8-dimethoxy-[1,2,4]triazolo[1,5-*c*]pyrimidin-2-yl)-6-(trifluoromethyl)benzenesulfonamide. Its herbicidal activity is described in The Pesticide Manual, Fifteenth Edition, 2009. Penoxsulam controls barnyard grass, as well as many broadleaf and sedge weeds in rice, turf, tree nut and vineyard crops, cereal and grain crops, and IVM. Its structure is:

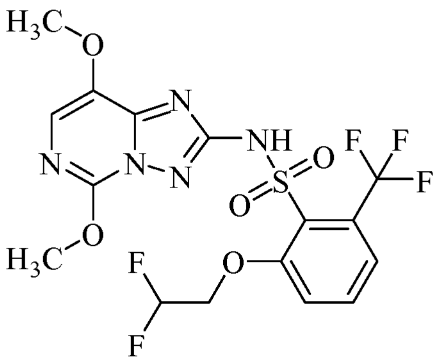

Pretilachlor is the common name for 2-chloro-*N*-(2,6-diethylphenyl)-*N*-(2-propoxyethyl)acetamide. Its herbicidal activity is described in The Pesticide Manual, Fifteenth Edition, 2009. Pretilachlor controls annual grasses, broadleaf weeds and sedges in transplanted and seeded rice. Its structure is:

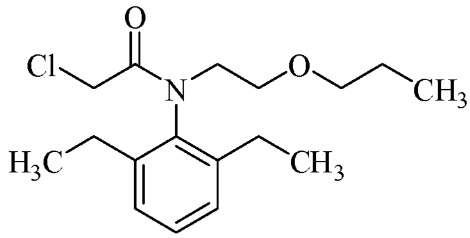

The term herbicide is used herein to mean an active ingredient that kills, controls or otherwise adversely modifies the growth of plants. A herbicidally effective or vegetation controlling amount is an amount of active ingredient which causes an adversely modifying effect and includes deviations from natural development, killing, regulation, desiccation, retardation, and the like. The terms plants and vegetation include germinant seeds, emerging seedlings, plants emerging from vegetative propagules, and established vegetation.

Herbicidal activity is exhibited by the compounds of the synergistic mixture when they are applied directly to the plant or to the locus of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote non-selective or selective herbicidal action. In certain embodiments, the compositions described herein are applied preemergence to early postemergence to relatively immature undesirable vegetation to achieve the maximum control of weeds.

In some embodiments of the compositions and methods described herein, the active ingredient ratio (weight-to-weight, wt:wt) of pretilachlor to penoxsulam at which the herbicidal effect is synergistic lies within the range from 36:1 to 72:1. In some embodiments, the range if from 40:1 to 72:1.

In some embodiments of the compositions and methods described herein, the active ingredient ratio (weight-to-weight, wt:wt) of pretilachlor to penoxsulam is from 36:1 to 72:1In certain embodiments, the weight ratio is 40:1.

The rate at which the penoxsulam, pretilachlor, or mixture is applied will depend upon the particular type of weed to be controlled, the degree of control required, and the timing and method of application. In some embodiments, compositions described herein can be applied at an application rate from 155 grams active ingredient per hectare (gr ai/ha) to 1130 gr ai/ha based on the total amount of active ingredients in the composition. In some embodiments, the application rate is from 275 gr ai/ha to 950 gr ai/ha. In some embodiments, pretilachlor is applied at a rate from 150 gr ai/ha to 1080 gr ai/ha, and penoxsulam is applied at a rate from 10 gr ai/ha to 40 gr ai/ha. In some embodiments, pretilachlor is applied at a rate from 150 gr ai/ha to 1080 gr ai/ha, and penoxsulam is applied at a rate from 5 gr ai/ha to 50 gr ai/ha. In some embodiments, pretilachlor is applied at a rate from 270 gr ai/ha to 1080 gr ai/ha, and penoxsulam is applied at a rate from 7.5 gr ai/ha to 40 gr ai/ha. In some embodiments, pretilachlor is applied at a rate from 135 gr ai/ha to 1080 gr ai/ha, and penoxsulam is applied at a rate from 5 gr ai/ha to 40 gr ai/ha. In some embodiments, pretilachlor is applied at a rate from 90 gr ai/ha to 810 gr ai/ha, and penoxsulam is applied at a rate from 5.75 gr ai/ha to 30 gr ai/ha. In some embodiments, pretilachlor is applied at a rate from 270 gr ai/ha to 540 gr ai/ha, and penoxsulam is applied at a rate from 7.5 gr ai/ha to 23 gr ai/ha.

In certain embodiments, the penoxsulam is applied at a rate from 8 gr ai/ha to 15 gr ai/ha and the pretilachlor is applied at a rate from 270 gra ai/ha to 540 gr ai/ha. In certain embodiments, the penoxsulam is applied at a rate from 6 gr ai/ha to 19 gr ai/ha and the pretilachlor is applied at a rate from 216 gra ai/ha to 713 gr ai/ha. In certain embodiments, the penoxsulam is applied at a rate from 4 gr ai/ha to 30 gr ai/ha and the pretilachlor is applied at a rate from 135 gra ai/ha to 1080 gr ai/ha.

The components of the synergistic mixture can be applied either separately or as part of a multipart herbicidal system.

The synergistic mixtures described herein can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the synergistic compositions described herein include, but are not limited to: 4-CPA, 4-CPB, 4-CPP, 2,4-D, 3,4-DA, 2,4-DB, 3,4-DB, 2,4-DEB, 2,4-DEP, 3,4-DP, 2,3,6-TBA, 2,4,5-T, 2,4,5-TB, acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron, bensulide, bentazone, benzadox, benzfendizone, benzipram, benzobicyclon, benzofenap, benzofluor, benzoylprop, benzthiazuron, bicyclopyrone, bifenox, bilanafos, bispyribac, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole chlorprocarb, carfentrazone, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop, clofop, clomazone, clomeprop, cloprop, cloproxydim, clopyralid, cloransulam, CMA, copper sulfate, CPMF, CPPC, credazine, cresol, cumyluron, cyanatryn, cyanazine, cycloate, cyclosulfamuron, cycloxydim, cycluron, cyhalofop, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethametsulfuron, ethidimuron, ethiolate, ethofumesate, ethoxyfen, ethoxysulfuron, etinofen, etnipromid, etobenzanid, EXD, fenasulam, fenoprop, fenoxaprop, fenoxaprop-P, fenoxasulfone, fenteracol, fenthiaprop, fentrazamide, fenuron, ferrous sulfate, flamprop, flamprop-M, oryzalin, florasulam, fluazifop, fluazifop-P, fluazolate, flucarbazone, flucetosulfuron, fluchloralin, flufenacet, flufenican, flufenpyr, flumetsulam, flumezin, flumiclorac, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, furyloxyfen, glufosinate, glufosinate-P, glyphosate, halosafen, halosulfuron, haloxydine, haloxyfop, haloxyfop-P, hexachloroacetone, hexaflurate, hexazinone, imazamethabenz, imazamox, imazapic, imazapyr, imazaquin, imazethapyr, imazosulfuron, indanofan, indaziflam, iodobonil, iodomethane, iodosulfuron, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, molinate, monalide, monisouron, monochloroacetic acid, monolinuron, monuron, morfamquat, MSMA, naproanilide, napropamide, naptalam, neburon, nicosulfuron, nipyraclofen, nitralin, nitrofen, nitrofluorfen, norflurazon, noruron, OCH, orbencarb, *ortho*-dichlorobenzene, orthosulfamuron, oryzalin, oxadiargyl, oxadiazon, oxapyrazon, oxasulfuron, oxaziclomefone, oxyfluorfen, parafluron, paraquat, pebulate, pelargonic acid, pendimethalin, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, primisulfuron, procyazine, prodiamine, profluazol, profluralin, profoxydim, proglinazine, prometon, prometryn, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen, pyrasulfotole, pyrazolynate, pyrazosulfuron, pyrazoxyfen, pyribenzoxim, pyributicarb, pyriclor, pyridafol, pyridate, pyriftalid, pyriminobac, pyrimisulfan, pyrithiobac, pyroxasulfone, pyroxsulam, quinclorac, quinmerac, quinoclamine, quinonamid, quizalofop, quizalofop-P, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thiobencarb, tiocarbazil, tioclorim, topramezone, tralkoxydim, triafamone, tri-allate, triasulfuron, triaziflam, tribenuron, tricamba, triclopyr, tridiphane, trietazine, trifloxysulfuron, trifluralin, triflusulfuron, trifop, trifopsime, trihydroxytriazine, trimeturon, tripropindan, tritac tritosulfuron, vernolate and xylachlor.

The synergistic mixtures described herein can additionally be employed to control undesirable vegetation in many crops that have been made tolerant to or resistant to them or to other herbicides by genetic manipulation or by mutation and selection. The synergistic compositions described herein can, further, be used in conjunction with 2,4-D, glyphosate, glufosinate, dicamba, sulfonylureas or imidazolinones on 2,4-D tolerant, glyphosate-tolerant, glufosinate-tolerant, dicamba-tolerant, sulfonylurea-tolerant crops or imidazolinone-tolerant crops.

In certain embodiments, the synergistic compositions described herein are used in combination with herbicides that are selective for the crop being treated and which complement the spectrum of weeds controlled by these compounds at the application rate employed. In some embodiments, the synergistic compositions described herein and other complementary herbicides are applied at the same time, either as a combination formulation or as a tank mix.

The synergistic compositions described herein, in some aspects, are employed in combination with known herbicide safeners, such as benoxacor, benthiocarb, brassinolide, cloquintocet (mexyl), cyometrinil, cyprosulfamate,

daimuron, dichlormid, dicyclonon, dietholate, dimepiperate, disulfoton, fenchlorazole-ethyl, fenclorim, flurazole, fluxofenim, furilazole, harpin proteins, isoxadifen-ethyl, mefenpyr-diethyl, mephenate, MG 191, MON 4660, naphthalic anhydride (NA), oxabetrinil, R29148 and *N*-phenyl-sulfonylbenzoic acid amides, to enhance their selectivity.

In certain embodiments, the synergistic compositions described herein are applied in mixtures containing a herbicidally effective amount of the herbicidal components along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water dispersible granules, or wettable powders, or liquids, such as, for example, emulsifiable concentrates, solutions, emulsions or suspensions.

Suitable agricultural adjuvants and carriers that are useful in preparing the herbicidal mixtures described herien are well known to those skilled in the art. Some of these adjuvants include, but are not limited to, crop oil concentrate (mineral oil (85%) + emulsifiers (15%)); nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents used include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like. Specific organic solvents include toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N*,*N*-dimethyl alkylamides, dimethyl sulfoxide, liquid fertilizers and the like. In some embodiments, the carrier for the dilution of concentrates is water.

Suitable solid carriers include, *e.g.*, talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, and the like.

In certain embodiments, one or more surface-active agents are incorporated into the compositions described herien. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Surfactants conventionally used in the art of formulation and which may also be used in the present formulations are described, *inter alia*, in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Exemplary surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono- and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, particularly methyl esters.

In some embodiments, some of these materials, such as vegetable or seed oils and their esters, can be used interchangeably as an agricultural adjuvant, as a liquid carrier or as a surface active agent.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of the active ingredients in the synergistic compositions described herein is, in some embodiments, from 0.001 to 98 percent by weight. Concentrations from 0.01 to 90 percent by weight are often employed. In compositions designed to be employed as concentrates, the active ingredients, in some embodiments, are present in a concentration from 1 to 98 weight percent, and in certain embodiments, at a concentration of from 2 to 90 weight percent. Such compositions are, in some embodiments, diluted with an inert carrier, such as water, before application. The diluted compositions applied to weeds or the locus of weeds, in certain embodiments, contain 0.0001 to 1 weight percent active ingredient or, in other embodiments, contain 0.001 to 0.05 weight percent.

The present compositions can be applied to weeds or their locus by the use of conventional ground or aerial dusters, sprayers, and granule applicators, by addition to irrigation water, and by other conventional means known to those skilled in the art.

## Examples

## Evaluation of Preemergence Herbicidal Activity of Mixtures under Field Conditions

### Methodology

A field trial was conducted in rice in Taiwan using standard herbicide small plot research methodology. Plot size was 1 meter (m) wide by 1 m long. There were 3 replicates per treatment. Soil type was medium texture. Rice was sown by hand direct dry seeding as per normal local cultural practices. The rice crop was grown using normal cultural practices for fertilization, watering, flooding and maintenance to ensure good growth of the crop and the weeds.

Treatments were applied by backpack sprayer using compressed air at 30 pounds per square inch (psi) spray pressure. Spray tips were Flat Fan Teejet nozzles, delivering a spray volume of 300 liters per hectare (L/ha).

For each treatment, the appropriate formulated product amount to treat the plot area, to achieve the desired application rate, based on unit area of application (hectare), was calculated, measured, and mixed in water prior to applying with the backpack sprayer. Treatments were rated as compared to the untreated control plots.

### Evaluation

The treated plots and control plots were rated blind at various intervals after application. Ratings were based of Percent (%) Visual weed control, where 0 corresponds to no injury and 100 corresponds to complete kill.

Data were collected and analyzed using various statistical methods.

Colby's equation was used to determine the herbicidal effects expected from the mixtures (Colby, S. R. Calculation of the synergistic and antagonistic response of herbicide combinations. Weeds 1967, 15, 20-22).

The following equation was used to calculate the expected activity of mixtures containing two active ingredients, A and B:

$$\text{Expected} = A + B - (A \times B/100)$$

A = observed efficacy of active ingredient A at the same concentration as used in the mixture and B = observed efficacy of active ingredient B at the same concentration as used in the mixture. The results are summarized in Table 1.

Table 1. Synergistic grass weed control results at 7 days after Penoxsulam + Pretilachlor were applied preemergence to seeded rice - Field trial Taiwan.

| | | % Control | |
|---|---|---|---|
| Application Rate (gr ai/ha) | | ECHCG | |
| Penoxsulam | Pretilachlor | Obs | *Ex* |
| 7.5 | 0 | 47 | - |
| 0 | 270 | 3 | - |
| 7.5 | 270 | 90 | 48 |
| 7.5 | 0 | 47 | - |
| 0 | 540 | 3 | - |

(continued)

| Application Rate (gr ai/ha) | | % Control | |
|---|---|---|---|
| | | ECHCG | |
| Penoxsulam | Pretilachlor | Obs | *Ex* |
| 7.5 | 540 | 96 | 48 |
| ECHCG - *Echinochloa crus-galli* (barnyardgrass)<br>Obs = Observed results<br>Ex = Expected results based on Colby's Analysis<br>gr ai/ha = grams of active ingredient per hectare | | | |

Table 2. Synergistic grass weed control results at 28 days after Penoxsulam + Pretilachlor were applied preemergence to seeded rice - Field trial Taiwan.

| Application Rate (gr ai/ha) Penoxsulam Pretilachlor | | % Control | |
|---|---|---|---|
| | | ECHCG | |
| | | Obs | *Ex* |
| 7.5 | 0 | 7 | - |
| 0 | 270 | 0 | - |
| 7.5 | 270 | 65 | 7 |
| 15 | 0 | 80 | - |
| 0 | 270 | 0 | - |
| 15 | 270 | 98 | *80* |
| 7.5 | 0 | 7 | - |
| 0 | 540 | 0 | - |
| 7.5 | 540 | 86 | *7* |
| 15 | 0 | 80 | - |
| 0 | 540 | 0 | - |
| 15 | 540 | 98 | *80* |
| ECHCG - *Echinochloa crus-galli* (barnyardgrass)<br>Obs = Observed results<br>Ex = Expected results based on Colby's Analysis<br>gr ai/ha = grams of active ingredient per hectare | | | |

## Claims

1. A synergistic herbicidal mixture comprising a herbicidally effective amount of (a) penoxsulam and (b) pretilachlor, wherein weight ratio of pretilachlor to penoxsulam is from 36:1 to 72:1.

2. The mixture of claim 1, wherein the weight ratio is about 40:1.

3. A herbicidal composition comprising the herbicidal mixture of claim 1 and an agriculturally acceptable adjuvant or carrier.

4. A method of controlling undesirable vegetation which comprises contacting the undesirable vegetation or the locus thereof with a herbicidally effective amount of the synergistic herbicidal mixture of claim 1.

5. The method of claim 4, wherein the undesirable vegetation is controlled in rice, cereal crops, grain crops, turf, industrial vegetation management (IVM), sugar cane, tree orchards, or vine orchards.

6. The method of claim 4, wherein the undesirable vegetation or locus thereof is contacted preemergence to early postemergence.

7. The method of claim 4, wherein the undesirable vegetation is controlled in rice.

8. The method of claim 4, wherein the undesirable vegetation or locus thereof is contacted preemergence.

9. The method of claim 4, wherein the herbicidal mixture is applied at an application rate from 155 grams active ingredient per hectare (gr ai/ha) to 1130 gr ai/ha based on the total amount of active ingredients in the composition.

10. The method of claim 4, wherein penoxsulam is applied at a rate from 4 gr ai/ha to 30 gr ai/ha and pretilachlor is applied at a rate from 135 gr ai/ha to 1080 gr ai/ha.

11. The method of claim 4, wherein the undesirable vegetation is barnyardgrass.

12. The method of claim 4, wherein the components of the synergistic mixture are applied as part of a multipart herbicidal system.

**Patentansprüche**

1. Eine synergistische herbizide Mischung umfassend eine herbizid wirksame Menge an (a) Penoxsulam und (b) Pretilachlor, wobei das Gewichtsverhältnis von Pretilachlor zu Penoxsulam von 36:1 bis 72:1 beträgt.

2. Die Mischung gemäß Anspruch 1, wobei das Gewichtsverhältnis 40:1 beträgt.

3. Eine herbizide Zusammensetzung umfassend die herbizide Mischung gemäß Anspruch 1 und einen landwirtschaftlich akzeptablen Hilfs- oder Trägerstoff.

4. Ein Verfahren zur Bekämpfung unerwünschter Vegetation, welches das In-Kontakt-Bringen der unerwünschten Vegetation oder des Ortes derselben mit einer herbizid wirksamen Menge der synergistischen herbiziden Mischung gemäß Anspruch 1 umfasst.

5. Das Verfahren gemäß Anspruch 4, wobei die unerwünschte Vegetation in Reis, Getreidenutzpflanzen, Getreidekulturen, Rasen, im industriellen Vegetationsmanagement (IVM), Zuckerrohr, Baum- oder Weingärten bekämpft wird.

6. Das Verfahren gemäß Anspruch 4, wobei die unerwünschte Vegetation oder der Ort derselben im Vorlauf bis frühem Nachlauf in Kontakt gebracht wird.

7. Das Verfahren gemäß Anspruch 4, wobei die unerwünschte Vegetation in Reis bekämpft wird.

8. Das Verfahren gemäß Anspruch 4, wobei die unerwünschte Vegetation oder der Ort derselben im Vorlauf in Kontakt gebracht wird.

9. Das Verfahren gemäß Anspruch 4, wobei die herbizide Mischung in einer Anwendungsmenge von 155 Gramm Wirkstoff pro Hektar (g ai/ha) bis 1.130 g ai/ha, bezogen auf die Gesamtmenge der Wirkstoffe in der Zusammensetzung, angewandt wird.

10. Das Verfahren gemäß Anspruch 4, wobei Penoxsulam in einer Menge von 4 g ai/ha bis 30 g ai/ha und Pretilachlor in einer Menge von 135 g ai/ha bis 1.080 g ai/ha angewandt wird.

11. Das Verfahren gemäß Anspruch 4, wobei die unerwünschte Vegetation Hühnerhirse ist.

12. Das Verfahren gemäß Anspruch 4, wobei die Bestandteile der synergistischen Mischung als ein Teil eines mehrteiligen herbiziden Systems angewandt werden.

**Revendications**

1. Mélange herbicide synergique comprenant, en quantité à effet herbicide,

   a) du pénoxsulame
   b) et du prétilachlore,

   dans lequel le rapport pondéral du prétilachlore au pénoxsulame vaut de 36/1 à 72/1.

2. Mélange conforme à la revendication 1, dans lequel le rapport pondéral vaut 40/1.

3. Composition herbicide comprenant un mélange herbicide conforme à la revendication 1 et un adjuvant ou véhicule admissible en agriculture.

4. Procédé de lutte contre des végétaux indésirables, qui comporte le fait de mettre ces végétaux indésirables, ou l'endroit où ils se trouvent, en contact avec une quantité à effet herbicide d'un mélange herbicide synergique conforme à la revendication 1.

5. Procédé conforme à la revendication 4, dans lequel on lutte contre des végétaux indésirables dans des cultures de riz, de céréales ou de grains, sur du gazon, pour gérer de la végétation sur sites industriels (IVM), ou dans des plantations de canne à sucre, des vergers d'arbres fruitiers ou des vignobles.

6. Procédé conforme à la revendication 4, dans lequel les végétaux indésirables ou l'endroit où ils se trouvent sont mis en contact avec ledit mélange entre avant levée et tôt après levée.

7. Procédé conforme à la revendication 4, dans lequel on lutte contre des végétaux indésirables dans des cultures de riz.

8. Procédé conforme à la revendication 4, dans lequel les végétaux indésirables ou l'endroit où ils se trouvent sont mis en contact avec ledit mélange avant levée.

9. Procédé conforme à la revendication 4, dans lequel on applique le mélange herbicide à un taux d'application de 155 à 1130 gia/ha (grammes d'ingrédients actifs par hectare), calculé sur la base de la quantité totale d'ingrédients actifs dans la composition.

10. Procédé conforme à la revendication 4, dans lequel on applique le pénoxsulame à un taux de 4 à 30 gia/ha et le prétilachlore à un taux de 135 à 1080 gia/ha.

11. Procédé conforme à la revendication 4, dans lequel les végétaux indésirables sont du panic pied-de-coq.

12. Procédé conforme à la revendication 4, dans lequel les composants du mélange synergique sont appliqués en tant que partie d'un système herbicide en plusieurs parties.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101647450 A


### Non-patent literature cited in the description


- Herbicide Handbook. Weed Science Society of America, 2007, 429
- The Pesticide Manual. 2009
- McCutcheon's Detergents and Emulsifiers Annual. MC Publishing Corp, 1998
- Encyclopedia of Surfactants. Chemical Publishing Co, 1980, vol. I-III
- **COLBY, S. R.** Calculation of the synergistic and antagonistic response of herbicide combinations. *Weeds,* 1967, vol. 15, 20-22